# EUROPÄISCHE PATENTSCHRIFT

(11) **EP 4 036 605 B1**
(45) Veröffentlichungstag und Bekanntmachung des Hinweises auf die Patenterteilung: **11.03.2026**
(21) Anmeldenummer: 22150516.7
(22) Anmeldetag: 18.06.2015
(51) Int. Cl.: G01S 19/21

(54) **VERFAHREN ZUM PLAUSIBILISIEREN VON GNSS POSITIONSSIGNALEN**
METHOD FOR THE PLAUSIBILITY CHECK OF GNSS POSITIONING SIGNALS
PROCÉDÉ DE PLAUSIBILISATION DE SIGNAUX DE POSITION GNSS

(30) Priorität: 18.06.2014 DE 102014211787; 18.06.2014 DE 102014211788
(43) Veröffentlichungstag der Anmeldung: 03.08.2022
(62) Teilanmeldung aus: 15729853.0
(73) Patentinhaber: AUMOVIO Germany GmbH, 60488 Frankfurt am Main (DE)
(72) Erfinder: Zalewski, Michael, 90411 Nürnberg (DE); Antoni, Henrik, 90411 Nürnberg (DE); Stählin, Ulrich, 90411 Nürnberg (DE)
(74) Vertreter: Aumovio Corporation

(56) Entgegenhaltungen:
- DE-A1- 102007 008 853
- DE-A1- 102011 106 591
- US-A- 5 771 008
- JOVANOVIC ALEKSANDAR ET AL: "Multi-test detection and protection algorithm against spoofing attacks on GNSS receivers", 2014 IEEE/ION POSITION, LOCATION AND NAVIGATION SYMPOSIUM - PLANS 2014, IEEE, 5 May 2014 (2014-05-05), pages 1258 - 1271, XP032616451, DOI: 10.1109/PLANS.2014.6851501
- JAFARNIA-JAHROMI ALI ET AL: "GPS Vulnerability to Spoofing Threats and a Review of Antispoofing Techniques", INTERNATIONAL JOURNAL OF NAVIGATION AND OBSERVATION, vol. 2012, 18 July 2012 (2012-07-18), US, pages 1 - 16, XP093312488, ISSN: 1687-5990, DOI: 10.1155/2012/127072
- HENGQING WEN ET AL: "Countermeasures for GPS Signal Spoofing", PROCEEDINGS OF ION GPS/GNSS, XX, XX, no. 18th, 13 September 2005 (2005-09-13), pages 1285 - 1390, XP007903714

## Beschreibung

Die Erfindung betrifft ein Verfahren zum Plausibilisieren von Positionssignalen eines globalen Satellitennavigationssystems in einem Signalempfänger, insbesondere Fahrzeugen bzw. Landfahrzeugen.

Im Stand der Technik ist die Verwendung eines globalen Satellitennavigationssystems (hiernach kurz: GNSS für Global Navigation Satellite System), das eventuell durch weitere Fahrzeugsensoren gestützt, wobei die Fahrzeugsensoren ggf. miteinander fusioniert werden, ein gängiges Verfahren für die Bestimmung der Eigenposition des Fahrzeugs. In der Regel ist der Empfänger bzw. Sensor der GNSS Positionssignale der einzige Sensor, der eine Eigenposition bzw. Absolutposition des Signalempfängers liefert. Ebenso stellt er eine globale Zeitbasis zur Verfügung, die zur Synchronisation mehrerer Sensoren bzw. Systeme bzw. Car2X / Fahrzeug-zu-X (hiernach kurz V2X für Vehicle-2-X) Systeme genutzt werden kann. Im Gegensatz zu im Fahrzeug verbauten Sensoren wie IMU, Wheelspeed etc. wird der GNSS-Sensor durch die Umwelt beeinflusst und kann von außen (auch ohne Eingriff in die Fahrzeughardware) gestört werden. Neben prinzipbedingten Störungen wie Abschattungen und dem sog. Multipath, kann der GNSS-Sensor bewusst künstlich gestört (Jammer) oder manipuliert (Spoofer) werden.

Jammer können dabei z.B. durch künstliches Rauschen die Positions- bzw. Nutzsignale des GNSS überlagern, wodurch der GNSS-Empfang effektiv abreißt und kein GNSS-Fix (Positionslösung) mehr möglich ist. Dies ist gleichzusetzen mit einer Abschattung und ist kurzzeitig unkritisch für die Lokalisierung. Spoofer hingegen spielen dem System falsche Positionen vor, indem sie aufgezeichnete oder künstlich berechnete GNSS-Signale aussenden. Für den GNSS-Sensor ist es hierbei nicht möglich zu erkennen, dass es sich um gefälschte Signale handelt. Die Folge ist eine falsche Positionsbestimmung und ebenso eine falsche Zeitbasis. Ein auf diese Art gestörtes System kann durch die V2X-Kommunikation die V2X-Funktion stören und sogar Fehler auf andere Fahrzeuge übertragen. Dies kann zum Sicherheitsleck für das V2X-System werden. Werden die Spooferdaten nicht nur direkt ins eigene System eingespeist, sondern per Funk übertragen, verbreitet sich die Fälschung im gesamten Umfeld und ist in allen Systemen vorhanden.

Die Gründe für die Verwendung von Jammern oder Spoofern sind dabei vielfältig und reichen von einem privaten Interesse - bspw. möchte man nicht verfolgt oder überwacht werden - bis zu einem wirtschaftlichen Interesse, wie z. B. vortäuschen von Höchstgeschwindigkeiten, Ruhe-/Pausenzeiten, genutzte Stra-ßenverbindungen und Mautstellen etc.

Werden die gefälschten GNSS Positionssignale nicht nur direkt in das System des Spoofers eingespeist, sondern, wie bei kostengünstigen GPS-Jammern üblich, per Funk übertragen, so wirken sich die Manipulationen nicht nur auf das eigene Fahrzeug aus, sondern auf alle Fahrzeuge in der Umgebung, bzw. das gesamte System kann in einer gewissen Reichweite von außen manipuliert werden.

DE102007008853A1 beschreibt ein Verfahren zur Feststellung eines Täuschfelds. Die Täuschung eines GPS-Empfängers erfolgt über einen Versatz der übertragenen Daten. Ein tatsächliches Satellitennavigationssignal wird durch einen Positionsaufnehmer an einem Ort A empfangen, an einen Täuschfeldsender übermittelt und von diesem verarbeitet, der Täuschfeldsender befindet sich an einem entfernten Ort B. Ein getäuschter GPS-Empfänger kann die Existenz einer Täuschung anhand eines Sprunges in der aus dem Signal abgeleiteten Zeit ermitteln. Aus den von dem Navigationsempfänger empfangenen Signalen kann ein solches Zeitsignal errechnet werden.

Das Dokument Jovanovic Aleksandar et al., "Multi-test detection and protection algorithm against spoofing attacks on GNSS receivers", 2014 IEEE/ION Position, Location and Navigation Symposium - Plans 2014, IEEE, 5. Mai 2014, bezieht sich auf Seiten 1258-1271 auf Spoofing-Attacken auf GNSS Empfänger. Spoofing-Signale können durch Satellitensimulatoren erzeugt werden, es gibt drei verschiedene Typen von Angriffen: Signal Synthesizer-Typ, Replay-Typ oder Smart-Spoofer-Typ. Der erste Typ kann leicht ermittelt werden. Der zweite Typ basiert auf dem Empfang eines GNSS Signals und dessen Weitergabe nach einer kurzen Verzögerung. Bei dem dritten Typ werden Signale übertragen, die eine Charakteristik wie jene von echten Satelliten aufweisen. Bei einem PTD wird die Statistik von C/N0 aufgezeichnet, wenn der Wert eine Schwelle übersteigt, wird ein Alarm ausgelöst. Auch die Dopplerverschiebung kann berücksichtigt werden. Bei einem SCT Verfahren wird eine Konsistenz-Prüfung durchgeführt. Der GNSS Empfänger hält Daten über Ort und Zeit vor und kann abrupte Änderungen während der Navigation, oder auch Inkonsistenzen feststellen, und dann in einen Alarmmodus schalten.

DE102011106591A1 beschreibt ein Verfahren zum Ermitteln einer Position eines GNSS Empfängers, dessen Funktion von einer Störquelle gezielt beeinträchtigt ist. Unter einer Störquelle werden Störsender und Spoofer verstanden. Bei dem System ist eine Sensoreinheit an vorgegebenen Verkehrswegepunkten angeordnet, wobei die Sensoren ein Störsignal detektieren. Die Verkehrswegepunkte können Grenzübergänge, Mautstellen, Parkplätze usw. umfassen. Aus dem Ort des Verkehrswegepunkts wird die Position des Kraftfahrzeugs ermittelt.

Die Dokumente JAFARNIA-JAHROMI ALI ET AL: "GPS Vulnerability to Spoofing Threats and a Review of Antispoofing Techniques", INTERNATIONAL JOURNAL OF NAVIGATION AND OBSERVATION, Bd. 2012, 18. Juli 2012, und HENGQING WEN ET AL: "Countermeasures for GPS Signal Spoofing",PROCEEDINGS OF ION GPS/GNSS, Nr. 18th, 13. September 2005, Seiten 1285-1390, beschreiben verschiedene Verfahren der Detektion von Spoofing-Attacken auf GNSS-Empfänger.

Das GPS-System (Global Positioning System) im zivilen Nutzbereich bietet keine systemische Möglichkeit gefälschte Daten zu erkennen, sofern diese sinnvoll & konsistent sind und von der Plausibilisierung nicht herausgefiltert werden.

Aufgabe der Erfindung ist es daher ein effizientes Verfahren aufzuzeigen, womit empfangene Positionssignale auf ihre Plausibilität hin überprüft werden können.

Diese Aufgabe wird durch den Gegenstand des unabhängigen Anspruchs gelöst. Mögliche Ausgestaltungen werden in den abhängigen Ansprüchen beschrieben.

Ein erster Aspekt der Offenbarung umfasst ein Verfahren zum Plausibilisieren von Positionssignalen eines globalen Satellitennavigationssystems in einem Fahrzeug, das mindestens ein Erfassungssystem zum Erfassen von Objekten im Umfeld des Fahrzeugs und eine Empfangseinrichtung zum Empfangen der Positionssignale umfasst, aufweisend die Schritte:
- Empfangen der Positionssignale mittels der Empfangseinrichtung und Ermitteln der Eigenposition des Fahrzeugs anhand der Positionssignale,
- Erfassen mindestens eines Objekts im Umfeld mittels des Erfassungssystems und Ermitteln der Position des Objektes,
- Plausibilisieren der Positionssignale durch Vergleichen mindestens einer Position eines Objektes mit der Eigenposition des Fahrzeugs.

Dem ersten Aspekt der Offenbarung liegt der Grundgedanke zugrunde, dass mittels der Position der Objekte aus der Umgebung eine Schätzung der Eigenposition des Fahrzeugs möglich ist, die zum einen von den Positionssignalen des GNSS unabhängig ist und zum anderen zum Plausibilisieren der Positionssignale hinreichend präzise ist. Bei dem Erfassungssystem handelt es sich somit um ein System, das prinzipiell unabhängig von der Ermittlung der Eigenposition über die Positionssignale des GNSS funktioniert.

Zum Vergleichen der Position eines Objektes mit der Eigenposition des Fahrzeugs basierend auf den GNSS Positionssignalen können unterschiedliche Kriterien zum Plausibilisieren zugrunde gelegt werden. Im einfachsten Fall wird ein Radius um die Eigenposition verwendet. Liegen die Objekte innerhalb des Radius, so können die Positionssignale plausibilisiert werden. Hierbei sind die Toleranzbereiche bei der Positionsermittlung über GNSS selbst auch zu berücksichtigen. Unter der Annahme, dass Spoofer eine grundsätzlich falsche Positionsangabe vortäuschen möchten, kann ein Plausibilisieren dann versagt werden, wenn die Abweichung der Eigenposition von der Position des Objektes im Bereich von mehreren Kilometern liegt. Alternativ ist es aber auch denkbar kleinere Vergleichsschwellen anzulegen. Diese könnten vorteilhafterweise mit weiteren situativ bedingten Kriterien abgeglichen werden, wie z. B. gleiche Fahrtrichtung, Straße, etc.

Besonders bevorzugt wird der Schritt des Erfassens eines Objektes und Ermittelns der Position des Objektes über eine vom Objekt selbst versendete Nachricht durchgeführt. Dies kann beispielsweise über eine V2X Nachricht erfolgen, in der das Objekt sich selbst und seine Position beschreibt.

Das Erfassungssystem ist in der allgemeinsten Form ein System zum Erfassen von Positionsinformationen von abstrakten oder gegenständlichen Objekten, wie z. B. Ampeln, Gebäuden oder auch digitalen Daten, die über elektromagnetische Wellen übertragen werden.

Gemäß einer vorteilhaften Ausführungsform des Verfahrens umfasst das Erfassungssystem eine Kameraeinrichtung und ist zum visuellen Erkennen von Objekten, insbesondere Landmarken, wie z. B. Straßenschilder, Ortsschilder, usw., ausgebildet. Auf diese Weise können unterschiedlichste Arten von visuell erfassbaren Objekten mittels des Fahrzeugs erfasst werden, zu denen die Position der jeweiligen Objekte bekannt ist. Alternativ dazu ist auch die Verwendung von Radar oder Lidar Systemen denkbar, die nicht visuell, aber aufgrund ihrer speziellen Signalen Objekte erkennen können.

Gemäß einer vorteilhaften Ausführungsform des Verfahrens ist die jeweilige Position von Objekten aus einer lokalen Karte oder von einem externen Server abrufbar.

Gemäß einer vorteilhaften Ausführungsform des erfindungsgemäßen Verfahrens umfasst das Erfassungssystem eine Fahrzeug-zu-X bzw. V2X Kommunikationseinrichtung zum Empfangen von Objekten in Form von V2X Nachriten mit einer Positionsangabe eines Senders der V2X Nachricht. Besonders vorteilhaft ist hierbei der Austausch der Positionsdaten mit feststehenden Objekten, deren Position sich nicht ändert und bestenfalls auch von einer vertrauenswürdigen Stelle, z. B. eine staatliche oder öffentliche Einrichtung, festgelegt wird.

Gemäß einer vorteilhaften Ausführungsform des Verfahrens werden zum Plausibilisieren verifizierte und / oder signierte V2X Nachrichten verwendet werden. Auf diese Weise kann die Authentizität der V2X und die Echtheit der Positionsangabe sichergestellt werden.

Gemäß einer vorteilhaften Ausführungsform des Verfahrens umfasst das Erfassungssystem einen Bewegungssensor, insbesondere zum Erkennen von Beschleunigungen. Auf diese Weise können Straßenunebenheiten, die einen charakteristischen Beschleunigungsverlauf haben dazu genutzt werden, um die Eigenposition des Fahrzeugs festzustellen. Besonders vorteilhaft ist hierbei die Erkennung von fest eingerichteten Straßenunebenheiten, wie z. B. Bremsschwellen, deren Position sich i. d. R. nicht ändern.

Gemäß einer vorteilhaften Ausführungsform des Verfahrens erfasst das Erfassungssystem eines der Objekte aus der folgende Gruppe:
- Infrastruktureinrichtungen, wie Verkehrsschilder, Ampeln, Mautstationen, Tunneln, Wegweiser, Ortsschilder,
- Point-of-Interests POI, wie öffentliche Einrichtungen, Geschäfte, Parkhäuser, und / oder
- Straßenunebenheiten.

Ein zweiter, nicht beanspruchter Aspekt der Offenbarung betrifft ein Verfahren zum Plausibilisieren von Positionssignalen eines globales Satellitennavigationssystems zum Ermitteln der Eigenposition eines Signalempfängers, insbesondere Fahrzeug, der eine Empfangseinrichtung zum Empfangen mehrerer Positionssignale aufweist, aufweisend die Schritte:
- Empfangen der Positionssignale mittels der Empfangseinrichtung,
- Analysieren der Relativbewegungen zwischen dem Signalempfänger und mehreren Signalsendern der Positionssignale und / oder analysieren der Relativbewegungen zwischen mehreren Signalsendern zueinander anhand der jeweiligen Positionssignale,
- Plausibilisieren der Positionssignale, wenn keine Korrelation zwischen den Relativbewegungen vorliegt.

Dem zweiten Aspekt der Offenbarung liegt die Erkenntnis zugrunde, dass echte oder reguläre Positionssignale von GNSS Satelliten relativ zum Signalempfänger sich unabhängig voneinander bewegen. Die Relativbewegungen der Satelliten zum Signalempfänger sind nicht abhängig voneinander und korrelieren nicht miteinander. Ebenso ist die Wahrscheinlichkeit, dass diejenigen Satelliten, die für einen Signalempfänger sichtbar sind, sich abhängig voneinander bewegen. Zwar ist es möglich, dass auf einer Umlaufbahn mehrere Satelliten vorhanden sind und somit Abhängigkeiten vereinzelt auftreten können. In der Regel unterscheidet sich dieser Fall jedoch deutlich von dem Fall, bei dem ein Spoofer mehrere Positionssignale ausgehend von einem einzigen Signalsender simuliert. Da es sich hier nur um einen einzigen Signalsender handelt, korrelieren die Relativbewegungen der simulierten Sender bzw. Quellen untereinander und auch relativ zu dem Signalempfänger. Zum Plausibilisieren der Positionssignale können daher unterschiedliche Schwellen von Korrelationen zwischen den Relativbewegungen angesetzt werden.

Gemäß einer vorteilhaften Ausführungsform des nicht erfindungsgemäßen Verfahrens wird die Relativbewegung zwischen dem Signalempfänger und jedem Signalsender anhand einer Dopplereffekt- und / oder Phasenmessung und / oder einer Messung der Deltaranges der jeweils empfangenen Signale durchgeführt. Unter Deltaranges wird ist eine Streckenänderung bzw. Entfernungsänderung oder die Relativgeschwindigkeit zwischen einem Satelliten und einem Signalempfänger, z. B. Fahrzeug, zu verstehen.

Gemäß einer vorteilhaften Ausführungsform des nicht erfindungsgemäßen Verfahrens wird vom Signalempfänger eine Ermittlung der Signalstärke für jedes Positionssignal durchgeführt. Zusätzlich oder alternativ zur vorgenannten Ausführungsform kann hierdurch eine weitere Möglichkeit zur Erkennung von Spoofern geschaffen werden. Die Signalstärke der Positionssignale, die von Spoofern ausgesendet werden, ist in der Regel gleichmäßig stark und deutlich stärker als echte Positionssignale von GNSS Satelliten. Insbesondere die uniforme Änderung, d. h. Zu- oder Abnahme der Signalstärke, der unterschiedlichen Positionssignale ist dazu verwendbar, um einen Spoofer zu erkennen.

Gemäß einer vorteilhaften Ausführungsform des nicht erfindungsgemäßen Verfahrens wird anhand der Signalstärken die jeweilige Richtung ermittelt, aus der das jeweilige Signal, z. B. Positionssignal eines Satellits oder ein anderes Signal eines V2X Kommunikationsteilnehmers, empfangen wird, wobei das Positionssignal plausibilisiert wird, wenn kein anderes Positionssignal aus der im Wesentlichen gleichen Richtungen empfangen wird. Der Begriff im wesentlich gleicher Richtung umfasst dabei einen Toleranzbereich, der die zu erwartende Empfangsrichtung definiert. Im dreidimensionalen Raum kommt es nicht vor, dass zwei Satelliten aus der gleichen Richtung ihre Positionssignale senden. Sie unterscheiden sich mindestens in einer der Raumrichtungen bzw. -vektoren. Anders verhält es sich bei verfälschten Positionssignalen von einem Spoofer, die in der Regel alle aus einer Richtung stammen.

Gemäß einer vorteilhaften Ausführungsform des nciht erfindungsgemäßen Verfahrens weist der Empfänger eine Antenneneinrichtung mit mindestens einer Richtantenne und / oder mehreren Antennen auf. Auf diese Weise können unterschiedliche Analysen der Positionssignale durchgeführt werden.

Ein dritter Aspekt der Offenbarung umfasst ein Verfahren zum Plausibilisieren von Positionssignalen eines globalen Satellitennavigationssystems in einem Signalempfänger, insbesondere Fahrzeug, das eine Empfangseinrichtung zum Empfangen der Positionssignale umfasst, aufweisend die Schritte:
- Empfangen der Positionssignale zum Ermitteln der Eigenposition des Signalempfängers,
- Vergleichen der Positionssignale mit vorigen Positionssignalen des Signalempfängers,
- Plausibilisieren der Positionssignale, wenn keine sprunghafte Änderung von Eigenschaften der empfangenen Positionssignale zu Eigenschaften voriger Positionssignale vorliegt.

Die vorigen Positionssignale wurden dabei durch folgende Schritte plausibilisiert:
- Erfassen mindestens eines Objekts im Umfeld mittels des Erfassungssystems und Ermitteln der Position des Objektes,
- Plausibilisieren der vorherigen Positionssignale durch Vergleichen mindestens einer Position eines Objektes mit der Eigenposition des Signalempfängers.

Dem dritten Aspekt der Offenbarung liegt die Erkenntnis zugrunde, dass von Spoofern verbreitete Positionssignale sich im Gegensatz von echten Satellitensignalen eines GNSS sich über einen beschränkten Bereich ausbreiten und somit von einem Fahrzeug durch den Vergleich mit vorangegangen Positionssignalen erkennbar sind. Durch Heranziehen bereits empfangener, insbesondere plausibilisierter Positionssignalen, können sprunghafte Änderungen von Eigenschaften der Positionssignale gut erkannt werden. Durch Anpassung der Sprungschwellen können dann nicht plausible Sprünge in den Positionssignalen erkannt werden.

Gemäß einer vorteilhaften Ausführungsform des Verfahrens umfassen die Eigenschaften der Positionssignale Informationen über die vom Sender verwendete Zeit bzw. Uhr oder den Zeitstempel des Positionssignals. Problematisch bei Positionssignalen ist insbesondere die exakte Synchronisation der Zeitangabe des Spoofers zur echten Zeit der Satelliten. Auf diese Weise kann daher auch eine Plausibilisierung der Positionssignale durchgeführt werden.

Gemäß einer vorteilhaften Ausführungsform des Verfahrens werden die Positionssignale plausibilisiert, wenn keine sprunghafte Änderung der anhand der Positionssignale ermittelten Eigenposition zu den vorigen Eigenpositionen vorliegt.

Gemäß einer vorteilhaften Ausführungsform des Verfahrens wird das Verfahren mittels einer Infrastruktureinrichtung, insbesondere Ampeln, durchgeführt. Hierbei sind zwei alternativen denkbar. Gemäß einer ersten Alternative weist die Infrastruktureinrichtung eine Empfangseinrichtung zum Empfangen von GNSS Positionssignalen auf. Auf diese Weise können Spoofer einfach durch Abgleich der über die Positionssignale abgeleiteten Eigenposition mit der gespeicherten Eigenposition der Infrastruktureinrichtung entdeckt werden. Eine Erkennung gefälschter GNSS Positionssignale ist somit möglich, da diese nicht zur Erwartungshaltung passen und Sprünge aufweist. Eine Infrastruktur kann die über GNSS ermittelte Position und Zeit, durch Abgleich mit hinterlegter Position und ungestörter Netzwerkverbindung, was mit ungestörter oder echter Zeitangabe gleichkommt, ein Wiederspruch und damit gefälschtes GNSS erkennen. Für den Fall, dass der Spoofer die gefälschten Positionsdaten auch in V2X Nachrichten einbringt, kann eine V2X kommunikationsfähige Infrastruktureinrichtung den Spoofer über die falschen Positionsangaben in der V2X Nachricht erkennen und ggf. nachfolgende Autos warnen. Durch Vergleich der eigenen Position und Zeit mit der übertragenen Position und Zeit einer Infrastruktur, die vorzugsweise sicher und verschlüsselt übertragen wird, kann ein Widerspruch und damit Manipulation des eigenen Fahrzeugs erkannt werden.

Gemäß einer vorteilhaften Ausführungsform des Verfahrens wird das Verfahren in einem Fahrzeug durchgeführt, wobei die Positionssignale zusätzlich mittels eines Verfahrens nach einem der vorstehenden Ausführungsformen gemäß dem ersten und / oder zweiten Aspekt der Offenbarung plausibilisiert werden. Diese Ausführungsform ermöglicht die Positionssignale auch dann zu plausibilisieren, falls ein Fahrzeug sich für eine längere Zeit im Bereich bzw. Sendebereich der Spoofer Positionssignale befindet und somit eine Erkennung von nicht plausiblen Positionssignalen mittels eines Vergleichs mit zeitlich älteren Positionssignalen nicht möglich ist.

Gemäß einer vorteilhaften Ausführungsform des Verfahrens wird bei einer sprunghaften Änderung der Eigenschaften der Positionssignale und / oder der Eigenposition in Abhängigkeit der Richtung der Änderung ein Ein- oder Austritt aus einem Bereich bzw. Sendebereich mit einem Signalsender ermittelt, der nicht plausible Positionssignale sendet.

Im Grenzbereich zwischen "gut" Empfang und "manipulation" werden via V2X Daten aus beiden Bereichen empfangen, die nicht zusammenpassen, wodurch eine Manipulation aufgedeckt werden kann, selbst wenn sich das eigene Fahrzeug durchgängig im Manipulierten Bereich befindet und keine Sprünge der eigenen empfangenen Positionssignale detektieren kann.

Gemäß einer vorteilhaften Ausführungsform des Verfahrens wird ein Signalsender, der nicht plausible Positionssignale sendet, mittels eines Handshake- bzw. Verifizierungsverfahrens ermittelt. Das Handshakeverfahren umfasst eine gesicherte Übertragung einer Nachricht über V2X mit zufälligem Inhalt auf die eine korrekte Antwort mit Bezug auf den zufälligen Inhalt erfolgt. Teilinhalt des zufälligen Inhalts sollte die eigene Position und Zeit, sowie die Position und Zeit und eine Bestätigungsinformation der Gegenstelle sein, ebenso wie eine Zufallszahl, die in beiden Botschaften identisch sein muss. Damit können Replay Attacken ausgeschlossen werden, die nicht korrekt auf den zufälligen Inhalt reagieren können, oder korrekt reagieren jedoch durch Widerspruch oder Plausibilisierungsmaßnahmen eine Manipulation aufdecken.

Gemäß einer vorteilhaften Ausführungsform Verfahrens wird ein Signalsender, der nicht plausible Positionsdaten sendet, mittels Tracking oder Ausschlussverfahrens ermittelt.

Gemäß einer vorteilhaften Ausführungsform des Verfahrens wird das vorgenannte Verfahren mittels eines externen Systems durchgeführt, welches Bewegungsinformationen von Fahrzeugen erhält, die eine V2X Kommunikationseinrichtung aufweisen.

Die Erfindung wird nachfolgend anhand von Ausführungsbeispielen und Figuren näher beschrieben. Es zeigen:
- Figur 1: eine schematische Darstellung eines Fahrzeugs zum ausführen der erfindungsgemäßen Verfahren, und
- Figur 2: eine schematische Darstellung einer Fahrsituation mit einem Fahrzeug zum ausführen der erfindungsgemäßen Verfahren.

In den Figuren werden gleiche technische Elemente mit gleichen Bezugszeichen versehen und nur einmal beschrieben.

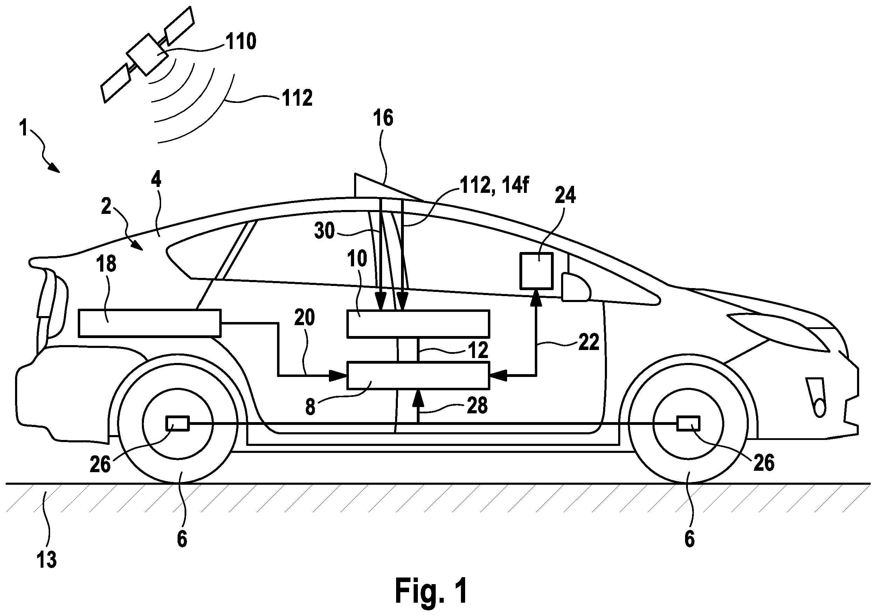

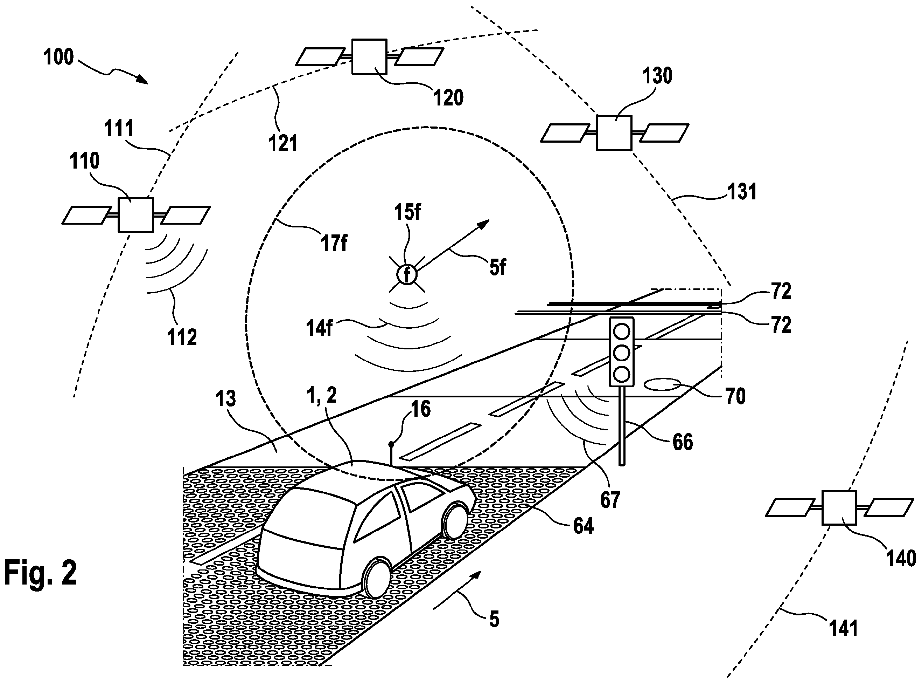

Es wird auf Fig. 1 Bezug genommen, die eine Prinzipdarstellung eines Fahrzeuges 1 mit einem Chassis 4 zeigt, das auf Rädern 6 in einer in Fig. 2 angedeuteten Fahrrichtung 5 fahrbar getragen wird.

Zum Ermitteln der Eigenposition bzw. Absolutposition des Fahrzeugs 1, empfängt das Fahrzeug 1 über eine an sich bekannte GNSS Antenneneinrichtung 16 mehrere Positionssignale 112 von mehreren GNSS Satelliten 110, vgl. Figur 2. In Figur 1 ist exemplarisch nur ein Satellit 110 abgebildet. Eine Empfangseinrichtung 10 ist mit der Antenneneinrichtung 16 verbunden und wertet die Positionssignale 112 derart aus, um daraus die Eigenposition zu ermitteln. Die Absolutposition wird im Regelfall in einer dem Fachmann bekannten Weise anhand der von GNSS Satelliten 110 ausgesendeten Positionssignale 112 abgeleitet. In diesem Beispiel sind die Antenneneinrichtung 16 und die Empfangseinrichtung 10 getrennt voneinander dargestellt und beschrieben. Es ist jedoch auch denkbar, dass beide Teile in einer einzigen Empfangseinrichtung integriert ausgebildet sind.

Darüber hinaus weist das Fahrzeug 1 ein Erfassungssystem 2 zum Erfassen von Objekten und zum Plausibilisieren der Eigenposition auf. Das Erfassungssystem 2 umfasst mehreren Komponenten 18, 24, 16, 10. Die in diesem Ausführungsbespiel beschriebene Konfiguration des Erfassungssystems 2 stellt nur eine Konfiguration dar. Je nach Bedarf kann das Erfassungssystem 2 mit weniger oder mehr Komponenten ausgestattet sein, was bspw. in Abhängigkeit von den zu ausführenden Verfahren festlegbar ist.

Zum einen weist das Erfassungssystem mehrere Bewegungssensoren in Form eines Inertialsensors 18 auf, der Fahrdynamikdaten 20 des Fahrzeuges 1 erfasst. Darunter fallen bekanntermaßen eine Längsbeschleunigung, eine Querbeschleunigung sowie eine Vertikalbeschleunigung und eine Wankrate, eine Nickrate sowie eine Gierrate des Fahrzeuges 1. Diese Fahrdynamikdaten 20 werden in der vorliegenden Ausführung herangezogen, um den Informationsgehalt Daten 12 über die Eigenposition des Fahrzeugs 1 zu steigern und beispielsweise die Position und die Geschwindigkeit des Fahrzeuges 1 auf der Fahrbahn 13 zu präzisieren. Die präzisierten Daten können dann von einem Navigationsgerät selbst dann verwendet werden, wenn das GNSS Positionssignal 101 beispielsweise unter einem Tunnel nicht verfügbar ist. Zur weiteren Steigerung des Informationsgehaltes der Eigenposition können optional noch weitere Bewegungsaufnahmesensoren in Form von Raddrehzahlsensoren 26 verwendet werden, die die Raddrehzahlen 28 der einzelnen Räder 6 des Fahrzeuges 2 erfassen.

Außerdem umfasst das Erfassungssystem 3 ein weiteres Sensorcluster 24 zum Erfassen von gegenständlichen Objekten. Das Sensorcluster 24 umfasst eine Kameraeinrichtung, eine Radareinrichtung und eine Lidareinrichtung und ermöglicht die Objekte im Umfeld des Fahrzeugs zu erfassen. Die Daten 22 des Sensorclusters 24 können dann dazu genutzt werden, um in der Auswerteeinrichtung 8 die Objekte zu erkennen bzw. identifizieren und deren Position zu bestimmen.

Ferner umfasst das Erfassungssystem eine V2X Kommunikationseinrichtung, die in diesem Ausführungsbeispiel in die Antenneneinrichtung 16 und der Empfangseinrichtung 10 integriert ist. Es sei angemerkt, dass im Sinne der Erfindung V2X Nachrichten 30 als Objekte verstanden werden. Die Antenne 16 wird auch dazu verwendet, um V2X Nachrichten 30 zu empfangen und auszusenden. Die Empfangseinrichtung 10 weist eine Partition zum Lesen und Verarbeiten der V2X Nachrichten 30 auf. Auf diese Weise sind beispielsweise die in den V2X Nachrichten 30 enthaltenen Positionsinformationen auslesbar. Darüber hinaus ermöglicht die Empfangseinrichtung 10 die Überprüfung von Signaturen der V2X Nachrichten sowie die Durchführung von Handshake bzw. Verifikationsverfahren mit anderen V2X Kommunikationsteilnehmern. Die Auswerteeinrichtung 8 empfängt von den unterschiedlichen Komponenten 18, 24, 16, 10 des Erfassungssystems 2 Daten und Informationen über die Eigenposition und das Umfeld des Fahrzeugs 1 und gleicht diese untereinander ab. Zum Plausibilisieren der Eigenposition sind dabei mehrere Verfahren vorgesehen, die je nach Konfiguration der Auswerteinrichtung 8 einzeln oder kombiniert ausführbar sind.

Es wird nachfolgend auf die einzelnen Plausibilisierungsverfahren und auf Figur 2 eingegangen.

Figur 2 stellt folgende Fahrsituation dar. Das Fahrzeug 1 fährt auf der Straße 13 in Richtung des Pfeils 5. Im Sichtfeld des Fahrzeugs 1 befinden sich vier GNSS Satelliten 110, 120, 130, 140, die sich jeweils auf ihren Umlaufbahnen 111, 121, 131, 141 bewegen. Jedes der Satelliten 110, 120, 130, 140 sendet Positionssignale 112 aus, worüber das Fahrzeug 1 seine Eigenposition ermitteln kann. Der Übersicht halber sind die Positionssignale 112 nur für den Satelliten 110 dargestellt. In gleicher Weise senden auch die Satelliten 120, 130, 140 Positionssignale aus.

Zusätzlich zu den Satelliten 110, 120, 130, 140 befindet sich ein weiterer Positionssignalsender in Form eines Spoofers 15f, der nicht authentische bzw. gefälschte Positionssignale 14f aussendet. Der Spoofer 15f sendet seine gefälschten Positionssignale 14f innerhalb eines Sendebereichs 17f, der auf das Umfeld des Spoofers 15f beschränkt ist und je nach Sendeleistung variiert. Befindet sich das Fahrzeug 1 sich jedoch innerhalb des Sendebereichs 17f, so werden die Positionssignale 112 der Satelliten 110, 120, 130, 140 überspielt. Das kann dazu führen, dass eine Eigenposition des Fahrzeugs ermittelt wird, das sich gänzlich an einem anderen Ort befindet.

Der Spoofer 15f kann bspw. ein stillstehendes oder ein sich bewegendes Fahrzeug auf der Straße 13 sein. Die Bewegungsrichtung des Spoofers 15f ist über den Pfeil 5f dargestellt. Ähnlich zu den Satelliten 110, 120, 130, 140 sendet der Spoofer 15f in sich plausible Positionssignale 14f aus, die ausreichen, um die Eigenposition des Fahrzeugs 1 zu bestimmen. Die Positionssignale 15f stammen jedoch nicht von unterschiedlichen Signalsendern, wie es bei den Satelliten 110, 120, 130, 140 der Fall ist. Daher kann zwar die Eigenposition des Fahrzeugs 1 ermittelt werden, sie stimmt aber nicht mit der tatsächlichen Eigenposition des Fahrzeugs 1 überein. Die falsche Eigenposition könnte eine Abweichung von mehreren Kilometern im Vergleich zur tatsächlichen Eigenposition aufweisen.

Gemäß einem ersten Ausführungsbeispiel kann eine Überprüfung oder die Plausibilität der Positionssignale 14f anhand der folgenden Schritte durchgeführt werden.

Zunächst werden die Positionssignale 14f des Spoofers 15f über die Antenneneinrichtung 16 der Empfangseinrichtung 10 empfangen. Die Empfangseinrichtung 10 ermittelt anhand der Spoofer Positionssignale 14f die Eigenposition des Fahrzeugs 1 in gleicher Weise, wie reguläre Positionssignale zum Bestimmen der Eigenposition verwendet werden.

Parallel dazu erfasst das Erfassungssystem 2 mehrere Objekte 66, 64 im Umfeld und ermittelt die Positionen der Objekte 66, 64. Im vorliegenden Beispiel erfasst das Fahrzeug 1 mittels der Kameraeinrichtung des Sensorclusters 24 die Ampel 66. Über die Inertialsensoren 18 wird die Pflastersteinstraße 64 erfasst. Letzteres ermöglicht zwar nur eine bereichsweise Lokalisierung des jeweiligen Objektes, kann aber zum Plausibilisieren ausreichen. Andere Straßenunebenheiten, wie z. B. ein Gullideckel 70 oder Straßenrampen 72 ermöglichen eine präzisere Lokalisierung des Objektes und somit des Umfelds des Fahrzeugs über die Bewegungssensoren. Die jeweilige Position von Objekten ist bspw. aus einer lokalen Karte oder von einem externen Server abrufbar. Denkbar ist auch, dass die Ampel mit einer V2X Kommunikationseinrichtung ausgestattet ist und V2X Nachrichten 67 verschickt, in der die Position der Ampel beschrieben ist. Besonders vorteilhaft ist es, wenn die Nachrichten 67 signiert sind. Zusätzlich oder alternativ dazu ist es denkbar, dass bestimmte Objekte, wie Ortseinfahrtschilder oder Wegweiser, über die Kameraeinrichtung erfasst und von der Auswerteeinrichtung inhaltlich ausgewertet werden. Auf diese Weise kann allein aufgrund der Erkennung des Objektes die Position des Fahrzeugs 1 ortsgenau festgestellt werden.

Durch einen Vergleich der Positionen der Ampel 66 und der Pflastersteinstraße 64 mit der Eigenposition des Fahrzeugs 1, lässt sich herausfinden, dass eine Abweichung zwischen der Eigenposition des Fahrzeugs und der Position der Objekte bspw. in der Größenordnung von mehreren Kilometern vorliegt. Da diese Abweichung deutlich über der Fehlertoleranz von GNSS liegt, werden die Positionssignale 14f als nicht plausibel erkannt und für Anwendungen im Fahrzeug nicht verwendet. Zusätzlich dazu kann auch eine Warnung über V2X Nachrichten ausgegeben werden.

Besonders vorteilhafte Objekte zum Plausibilisieren der Eigenposition sind u. a.
- Infrastruktureinrichtungen, wie Verkehrsschilder, Ampeln, Mautstationen, Tunneln, Wegweiser, Ortsschilder,
- Point-of-Interests POI, wie öffentliche Einrichtungen, Geschäfte, Parkhäuser, und / oder
- Straßenunebenheiten.

Ein zweites Ausführungsbeispiel zum Plausibilisieren der Eigenposition sei hiernach beschrieben.

Im ersten Schritt werden wie vorstehend bereits beschrieben die Positionssignale 14f empfangen und daraus die Eigenposition des Fahrzeugs 1 ermittelt.

Die Empfangenen Positionssignale 15f werden mittels einer Messung des Dopplereffekts oder der Phase oder Deltaranges (Entfernungsänderungen) analysiert, wie es aus der Abstandsmessung von GNSS Positionssignalen bereits bekannt ist. Mittels dieser Messungen kann zum einen die Relativbewegung zwischen dem Signalempfänger bzw. das Fahrzeug 1 und dem Signalsender ermittelt werden. Im Regelfall kann aus dem Positionssignal 112 der Satelliten die Relativbewegung der Satelliten 110, 120, 130, 140 zu dem Fahrzeug 1 ermittelt werden. Da jeder Satellit 110, 120, 130, 140 sich auf seiner eigenen Umlaufbahn 111, 121, 131, 141 unabhängig von den anderen Satelliten 110, 120, 130, 140 bewegt, besteht bei diesen Relativbewegungen keine Korrelation. Im Falle des Spoofers 15f verhält es sich jedoch so, dass dieser zwar mehrere Signalsender simulieren kann. Diese stammen jedoch alle von derselben Quelle, so dass die Relativbewegung zwischen den simulierten Signalsendern und dem Fahrzeug 1 eine Korrelation aufweist, d. h. die Relativbewegungen eine Abhängigkeit zueinander aufweisen.

Sofern eine solche Korrelation festgestellt wird, ist ein Rückschluss auf gefälschte Positionssignale 14f möglich und diese sollten nicht plausibilisiert werden.

Zusätzlich oder alternativ dazu können die Signalstärke und / oder die Richtung des Signals als Grundlage dazu dienen, um eine Plausibilität des Positionssignals 14f festzustellen. Anhand der Signalstärken kann auch die jeweilige Richtung ermittelt werden, aus der das jeweilige Positionssignal empfangen wird. Das Positionssignal 14f wird nur dann plausibilisiert, wenn kein anderes Positionssignal aus der im Wesentlichen gleichen Richtungen empfangen wird. Hierzu ist es vorteilhaft die Antenneneinrichtung 16 mit mindestens einer Richtantenne und / oder mehreren Antennenmodulen auszustatten. Sofern bekannt ist, aus welcher Richtung die Positionssignale der eigentlichen Satelliten kommen müssen, kann auf diese Weise ein Positionssignal anhand der Richtung plausibilisiert werden.

Ein drittes Ausführungsbeispiel zum Plausibilisieren der Eigenposition sei hiernach beschrieben.

Im ersten Schritt werden, entsprechend wie in den vorigen Ausführungsbeispielen, Positionssignale 14f zum Ermitteln der Eigenposition des Signalempfängers bzw. Fahrzeugs 1 empfangen.

Im zweiten Schritt werden diese Positionssignale 14f mit vorigen oder älteren Positionssignalen des Fahrzeugs 1 verglichen. Dieser Schritt kann beispielsweise in der Auswerteeinrichtung 8 durchgeführt werden. Unter vorigen oder älteren Positionssignalen werden solche verstanden, die zeitlich vorher empfangen wurden. Der anwendbare Zeitraum der älteren Positionssignale kann vordefiniert sein oder in Abhängigkeit von Bewegungsaktivität, z. B. Geschwindigkeit des Fahrzeugs, ausgewählt werden. Alternativ dazu kann auch auf solche Positionssignale zurückgegriffen werden, die mittels anderer Verfahren, bspw. den zwei vorgenannten Ausführungsbeispielen, bereits plausibilisiert wurden.

Auf diese Weise stellt sich für das Fahrzeug 1 in Figur 2 folgende Situation ein. Das Fahrzeug 2 tritt gerade vom Sendebereich der regulären GNSS Satelliten 110, 120, 130, 140 in den Sendebereich 17f des Spoofers 15f ein. Die zwei unterschiedlichen Sendebereiche ließen sich auch in einen regulären und irregulären oder authentischen und nicht authentischen Sendebereich definieren.

Kommt das Fahrzeug nun von einem regulären Sendebereich in den irregulären Sendebereich 17f so ändern sich die Eigenschaften der Positionssignale, wie z. B. Phase, Laufzeit, Zeitstempel und weitere Informationen, die in einem GNSS Positionssignal enthalten sind, weil der Spoofer 15f die Satelliten nicht exakt Zeitsynchron zu Realität nachahmen kann. Schließlich ändert sich auch die Eigenposition des Fahrzeugs 1. Diese Änderungen der Eigenschaften sind sprunghaft, so dass aufgrund eines solchen Änderungsverlaufs ein Übergang von einem regulären Sendebereich in einen irregulären Sendebereich 17f erkennbar ist und die Positionssignale 14f nicht plausibilisiert werden sollten.

Befindet sich ein Fahrzeug für eine längere Zeit innerhalb des irregulären Sendebereichs 17f, so ist es mit diesem Verfahren die Plausibilität der Positionssignale 14f nicht überprüfbar. Hier können die vorgenannten Ausführungsbeispiele nützlich sein, um die Positionssignale 14f dennoch zu plausibilisieren. Daher ist eine Kombination der Ausführungsbeispiele besonders vorteilhaft. Insbesondere der Austausch von V2X Nachrichten mit Positionsangaben ermöglicht es einem Fahrzeug auch in so einem Fall eine Plausibilisierung durchzuführen.

Das hier beschriebene Ausführungsbeispiel ist nicht nur auf eine Anwendung in einem Fahrzeug beschränkt. In besonders vorteilhafter Weise kann das Verfahren auch in einer Infrastruktureinrichtung implementiert werden. Beispielsweise könnte eine Ampel 66 mit einem GNSS Positionssignalempfänger ausgestattet sein. Dieser würde bei einem vorbeifahrenden Spoofer 15f dessen Positionssignale 14f mit eigenen Positionssignalen, Positionsinformationen oder Eigenposition vergleichen. Da sich die Eigenposition der Ampel 66 nicht ändert, könnten diese Informationsbasis als feste Bezugsgröße verwendet werden. Ein GNSS Positionssignal 14f, das zu einer anderen Eigenposition führt, könnte auf diese Weise schnell als Spoofer 15f erkannt werden.

Für den Fall, dass es sich bei dem Spoofer 15f um ein Fahrzeug mit einer V2X Kommunikationseinrichtung handelt, was neben den gefälschten Positionssignalen 14f auch V2X Nachrichten mit entsprechend falschen Positionsinformationen verschickt, wäre es hilfreich ein Handshake- bzw. Verifikationsverfahren zu implementieren. Das Handshake Verfahren weist folgende Schritte auf:
- Senden einer Anfrage von einem ersten Fahrzeug zu einem zweiten Fahrzeug mit einer Variablen oder Zufallsgröße, wobei die zu erwartende Antwort auf die Anfrage des zweiten Fahrzeugs an das erste Fahrzeug von der Variablen oder Zufallsgröße abhängt,
- Erhalten der Antwort des zweiten Fahrzeugs durch das erste Fahrzeug, und
- Überprüfen der Antwort in Abhängigkeit von der Variable Zufallsgröße.

Da ein Spoofer 15f seine V2X Nachrichten routinehaft oder standardmäßig mit einer verfälschten Positionsinformation versehen würde, könnte diese Tatsache ausgenutzt werden, um den Spoofer zu erkennen. Eine Anfrage mit einer Variablen oder Zufallsgröße hinsichtlich der Positionsinformation könnte dann von einem Spoofer nicht korrekt beantwortet werden, wodurch kein gültiger Handshake zustande kommen würde.

Mittels der Plausibilität bzw. der fehlenden Plausibilität kann ein Spoofer 15f zuverlässig erkannt werden. Davon ausgehend können in einem V2X Netzwerk unterschiedliche Lösungen vorgesehen werden, um den Spoofer 15f zu verfolgen.

Eine Möglichkeit sieht vor, dass bei einer sprunghaften Änderung der Eigenschaften der Positionssignale und / oder der Eigenposition die Richtung der Änderung untersucht wird, um feststellen zu können, ob ein Ein- oder Austritt in einen irregulären Bereich stattgefunden hat. Bei einem regen Verkehrsfluss kann auf diese Weise die Grenze des irregulären Sendebereichs 17f schnell erkannt werden. Sinnvollerweise werden diese Informationen zu einem externen Auswertesystem weitergeleitet, der die Informationen zusammenführt und auswertet. Dieser könnte durch kontextuelle Filterung der Informationen, bspw. Fahrtrichtung, Geschwindigkeit der Fahrzeuge, usw. den Kreis der verdächtigen Fahrzeuge soweit reduzieren, so dass idealerweise ein Fahrzeug als Spoofer 15f identifiziert wird. Dieser könnte dann weiter über das V2X durch entsprechend autorisierte Stellen getrackt werden.

Es sei angemerkt, dass die hier beschriebene Architektur des Erfassungssystems 2 nur ein Beispiel ist und die beschriebenen Funktionen und Verfahren auf Basis anderer Architekturen realisierbar sind. Die Erfindung ist daher nicht auf das hier beschriebene Beispiel zu beschränken.

## Patentansprüche

1. Verfahren zum Plausibilisieren von Positionssignalen (112, 14f) eines globalen Satellitennavigationssystems in einem Fahrzeug (1), das mindestens ein Erfassungssystem (2) zum Erfassen von Objekten in einem Umfeld des Fahrzeugs und eine Empfangseinrichtung (16, 10) zum Empfangen der Positionssignale (112, 14f) umfasst, aufweisend die Schritte:
- Empfangen der Positionssignale (112, 14f) mit der Empfangseinrichtung (16, 10) zum Ermitteln der Eigenposition des Fahrzeugs (1),
- Vergleichen der empfangenen Positionssignale (112, 14f) mit vorigen Positionssignalen des Fahrzeugs (1),
- Plausibilisieren der empfangenen Positionssignale (112, 14f), wenn keine sprunghafte Änderung von Eigenschaften der empfangenen Positionssignale zu Eigenschaften der vorigen Positionssignale vorliegt; wobei die vorigen Positionssignale mittels der Empfangseinrichtung (16, 10) empfangen und durch folgende Schritte plausibilisiert wurden:
- Erfassen mindestens eines Objekts im Umfeld des Fahrzeugs mittels des Erfassungssystems (2) und Ermitteln der Position des Objektes,
- Plausibilisieren der vorigen - Positionssignale durch Vergleichen der ermittelten Position des zumindest einen erfassten Objektes mit einer anhand der vorigen Positionssignale ermittelten Eigenposition des Fahrzeugs (1).

2. Verfahren nach Anspruch 1, wobei die Eigenschaften der Positionssignale Informationen über die vom Sender verwendete Zeit bzw. Uhr umfassen.

3. Verfahren nach einem der vorhergehenden Ansprüche, wobei die Positionssignale (112, 14f) plausibilisiert werden, wenn keine sprunghafte Änderung der anhand der Positionssignale (112, 14f) ermittelten Eigenposition zu den vorigen Eigenpositionen vorliegt.

4. Verfahren nach einem der vorhergehenden Ansprüche, wobei das Verfahren mittels einer Infrastruktureinrichtung, insbesondere Ampeln (66), durchgeführt wird.

5. Verfahren nach einem der vorhergehenden Ansprüche, wobei bei einer sprunghaften Änderung der Eigenschaften der Positionssignale und / oder der Eigenposition in Abhängigkeit der Richtung der Änderung ein Ein- oder Austritt aus einem Bereich mit Signalsender ermittelt wird, der nicht plausible Positionssignale sendet.

6. Verfahren nach einem der vorhergehenden Ansprüche, wobei ein Signalsender (15f), der nicht plausible Positionsdaten sendet, mittels Tracking ermittelt wird.

7. Verfahren nach Anspruch 6, wobei das Verfahren mittels eines externen Auswertesystems durchgeführt wird, welches Bewegungsinformationen von Fahrzeugen erhält, die eine Fahrzeug-zu-X-Kommunikationseinrichtung aufweisen.

8. Verfahren nach einem der vorhergehenden Ansprüche, wobei der Schritt des Erfassens eines Objektes und Ermittelns der Position des Objektes über eine vom Objekt selbst versendete Nachricht durchgeführt wird.

9. Verfahren nach einem der vorhergehenden Ansprüche, wobei das Erfassungssystem eine Kameraeinrichtung umfasst und zum visuellen Erkennen von Objekten ausgebildet ist.

10. Verfahren nach einem der Ansprüche 1 bis 8, wobei das Erfassen eines Objekts mittels einer Radarsystems und/oder eines Lidarsystems erfolgt.

11. Verfahren nach einem der vorhergehenden Ansprüche, wobei die jeweilige Position von Objekten aus einer Lokalen Karte oder von einem externen Server abrufbar ist.

12. Verfahren nach einem der vorhergehenden Ansprüche, wobei das Erfassungssystem eine Fahrzeug-zu-X-Kommunikationseinrichtung zum Empfangen von Objekten in Form von Fahrzeug-zu-X-Nachrichten mit einer Positionsangabe eines Senders der Fahrzeug-zu-X-Nachricht aufweist.

13. Verfahren nach einem der vorhergehenden Ansprüche, wobei das Erfassungssystem eines der Objekte aus der folgenden Gruppe erfasst:
- Infrastruktureinrichtungen,
- Point-of-Interest,
und/oder
- Straßenunebenheiten.

## Claims

1. A method for checking the plausibility of position signals (112, 14f) of a global satellite navigation system in a vehicle (1), the method comprising at least one detection system (2) for detecting objects in an environment of the vehicle and a receiving device (16, 10) for receiving the position signals (112, 14f), comprising the steps:
- receiving the position signals (112, 14f) with the receiving device (16, 10) for determining the vehicle's own position (1),
- comparing the received position signals (112, 14f) with previous position signals of the vehicle (1),
- checking the plausibility of the received position signals (112, 14f) if there is no abrupt change in the properties of the received position signals compared to the properties of the previous position signals; wherein the previous position signals were received by means of the receiving device (16, 10) and were checked for plausibility by the following steps:
- detecting at least one object in the environment of the vehicle using the detection system (2) and determining the position of the object,
- checking the plausibility of the previous position signals by comparing the determined position of the at least one detected object with the vehicle's own position as determined based on the previous position signals (1).

2. The method of claim 1, wherein the properties of the position signals comprise information about the time or clock used by the transmitter.

3. The method of any one of the preceding claims, wherein the position signals (112, 14f) are deemed plausible if there is no abrupt change in the vehicle's own position as determined based on the position signals (112, 14f) compared to its previous own positions.

4. The method of any one of the preceding claims, wherein the method is carried out by means of an infrastructure facility, in particular traffic lights (66).

5. The method of any one of the preceding claims, wherein, in the event of an abrupt change in the properties of the position signals and/or the own position, an entry or exit from an area with a signal transmitter that sends implausible position signals is determined depending on the direction of the change.

6. The method of any one of the preceding claims, wherein a signal transmitter (15f) that sends implausible position data is identified by means of tracking.

7. The method of claim 6, wherein the method is carried out by means of an external evaluation system which receives movement information from vehicles which have a vehicle-to-X communication device.

8. The method of any one of the preceding claims, wherein the step of detecting an object and determining the position of the object is carried out via a message sent by the object itself.

9. The method of any one of the preceding claims, wherein the detection system comprises a camera device and is designed for the visual recognition of objects.

10. The method of any one of claims 1 to 8, wherein the detection of an object is carried out by means of a radar system and/or a lidar system.

11. The method of any one of the preceding claims, wherein the respective position of objects can be retrieved from a local map or from an external server.

12. The method of any one of the preceding claims, wherein the detection system comprises a vehicle-to-X communication device for receiving objects in the form of vehicle-to-X messages with a position indication of a transmitter of the vehicle-to-X message.

13. The method of any one of the preceding claims, wherein the detection system detects one of the objects from the following group:
- infrastructure devices,
- points of interest, and/or
- road irregularities.

## Revendications

1. Procédé de plausibilisation de signaux de position (112, 14f) d'un système global de navigation par satellite dans un véhicule (1), comprenant au moins un système de détection (2) pour détecter des objets dans l'environnement du véhicule et un dispositif de réception (16, 10) pour recevoir les signaux de position (112, 14f), comprenant les étapes :
- de réception des signaux de position (112, 14f) avec le dispositif de réception (16, 10) pour déterminer la position propre du véhicule (1),
- de comparaison des signaux de position reçus (112, 14f) avec les signaux de position précédents du véhicule (1),
- de plausibilisation des signaux de position reçus (112, 14f) en l'absence de variation abrupte des caractéristiques des signaux de position reçus par rapport aux caractéristiques des signaux de position précédents ; dans lequel les signaux de position précédents ont été reçus au moyen du dispositif de réception (16, 10) et leur plausibilité a été vérifiée par les étapes suivantes :
- la détection d'au moins un objet à proximité du véhicule au moyen du système de détection (2) et la détermination de la position de l'objet,
- la plausibilisation des signaux de position précédents par la comparaison de la position déterminée de l'au moins un objet détecté avec une position propre du véhicule (1) déterminée sur la base des signaux de position précédents.

2. Procédé selon la revendication 1, dans lequel les caractéristiques des signaux de position comprennent des informations sur l'heure ou l'horloge utilisée par l'émetteur.

3. Procédé selon l'une des revendications précédentes, dans lequel la plausibilité des signaux de position (112, 14f) est vérifiée s'il n'existe pas de variation abrupte dans la position propre déterminée sur la base des signaux de position (112, 14f) par rapport aux positions propres précédentes.

4. Procédé selon l'une des revendications précédentes, dans lequel le procédé est mis en œuvre au moyen d'une infrastructure, en particulier des feux de circulation (66).

5. Procédé selon l'une des revendications précédentes, dans lequel, en cas de variation abrupte des caractéristiques des signaux de position et/ou de la position propre, une entrée ou une sortie d'une zone avec un émetteur de signal qui envoie des signaux de position non plausibles est déterminée en fonction de la direction de la variation.

6. Procédé selon l'une des revendications précédentes, dans lequel un émetteur de signal (15f) qui envoie des données de position non plausibles est identifié au moyen d'un suivi.

7. Procédé selon la revendication 6, dans lequel le procédé est mis en œuvre au moyen d'un système d'évaluation externe qui reçoit des informations de mouvement de véhicules dotés d'un dispositif de communication véhicule-à-X.

8. Procédé selon l'une des revendications précédentes, dans lequel l'étape de détection d'un objet et de détermination de la position de l'objet est effectuée par l'intermédiaire d'un message envoyé par l'objet lui-même.

9. Procédé selon l'une des revendications précédentes, dans lequel le système de détection comprend un dispositif de caméra et est conçu pour la détection visuelle d'objets.

10. Procédé selon l'une quelconque des revendications 1 à 8, dans lequel la détection d'un objet est effectuée au moyen d'un système radar et/ou d'un système lidar.

11. Procédé selon l'une des revendications précédentes, dans lequel la position respective des objets peut être obtenue à partir d'une carte locale ou d'un serveur externe.

12. Procédé selon l'une des revendications précédentes, dans lequel le système de détection présente un dispositif de communication véhicule-à-X pour recevoir des objets sous forme de messages véhicule-à-X avec une indication de position de l'expéditeur du message véhicule-à-X.

13. Procédé selon l'une quelconque des revendications précédentes, dans lequel le système de détection détecte l'un des objets du groupe suivant :
- des infrastructures,
- un point d'intérêt et/ou
- des irrégularités de la chaussée.
